# EUROPEAN PATENT APPLICATION

(11) **EP 4 668 879 A1**
(43) Date of publication of application: **24.12.2025**
(21) Application number: 23922019.7
(22) Date of filing: 17.02.2023
(51) Int. Cl.: H04W 52/02

(54) **METHOD AND APPARATUS FOR UPDATING SRS CONFIGURATION INFORMATION, AND COMMUNICATION DEVICE AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2023/076951
(87) International publication number: WO 2024/168887

(57) **Abstract**

Provided in the embodiments of the present disclosure is a method for updating sounding reference signal (SRS) configuration information, which method is executed by a terminal. The method comprises: updating first configuration information in SRS configuration information, wherein the SRS configuration information comprises the first configuration information and second configuration information; and a terminal transmitting an SRS in at least two cells on the basis of the second configuration information. Herein, a terminal may update first configuration information in SRS configuration information, and thus when moving from one cell to another cell, the terminal may automatically update the first configuration information in the SRS configuration information, and transmit an SRS in at least two cells on the basis of second configuration information, thereby saving on the power consumption and extending the endurance of the terminal as compared to the manner in which SRS configuration information needs to be reacquired during moving from one cell to another cell.

## Description

### TECHNICAL FIELD

The present disclosure relates to the field of wireless communication technology, but is not limited to the field of wireless communication technology, and in particular, to a method and apparatus for updating SRS configuration information, a communication device, and a storage medium.

### BACKGROUND

In a wireless communication technology, a positioning method for a terminal in a radio resource control (RRC) inactive state and an RRC idle state is introduced. In a scenario embodiment, the sounding reference signal (SRS) for uplink positioning is configured per cell. Therefore, when the terminal moves from one cell to another cell, the configuration information of the SRS needs to be re-obtained. Thus, if the terminal frequently moves between different cells, the configuration information of the SRS needs to be frequently obtained, which may lead to more power consumption.

### SUMMARY

Embodiments of the present disclosure disclose a method and apparatus for updating SRS configuration information, a communication device, and a storage medium.

According to a first aspect of the embodiments of the present disclosure, there is provided a method for updating SRS configuration information, where the method is performed by a terminal, and the method includes:
updating first configuration information in sounding reference signal (SRS) configuration information;
where the SRS configuration information includes the first configuration information and second configuration information, and the terminal transmits an SRS in at least two cells based on the second configuration information.

According to a second aspect of the embodiments of the present disclosure, there is provided a method for updating SRS configuration information, where the method is performed by an access network device, and the method includes:
sending SRS configuration information to a terminal;
where the SRS configuration information includes first configuration information and second configuration information, the first configuration information is used by the terminal to transmit an SRS based on the first configuration information or updated first configuration information, and the second configuration information is used by the terminal to transmit an SRS in at least two cells based on the second configuration information. According to a third aspect of the embodiments of the present disclosure, there is provided an apparatus for updating SRS configuration information, where the apparatus includes:
an updating module, configured to update first configuration information in sounding reference signal (SRS) configuration information;
where the SRS configuration information includes the first configuration information and second configuration information, and a terminal transmits an SRS in at least two cells based on the second configuration information.

According to a fourth aspect of the embodiments of the present disclosure, there is provided an apparatus for updating SRS configuration information, where the apparatus includes:
a sending module, configured to send SRS configuration information to a terminal; and
where the SRS configuration information includes first configuration information and second configuration information, the first configuration information is used by the terminal to transmit an SRS based on the first configuration information or updated first configuration information, and the second configuration information is used by the terminal to transmit an SRS in at least two cells based on the second configuration information.

According to a fifth aspect of the embodiments of the present disclosure, there is provided a communication device, including:
a processor; and
a memory, configured to store an executable instruction by the processor;
where the processor is configured to, when running the executable instruction, cause the method according to any embodiment of the present disclosure to be implemented.

According to a sixth aspect of the embodiments of the present disclosure, there is provided a computer storage medium, where the computer storage medium stores a computer executable program, and when the executable program is executed by a processor, the method according to any embodiment of the present disclosure is implemented.

In the embodiments of the present disclosure, first configuration information in sounding reference signal (SRS) configuration information is updated, where the SRS configuration information includes the first configuration information and second configuration information, and the terminal transmits an SRS in at least two cells based on the second configuration information. Here, since the terminal may update the first configuration information in the SRS configuration information, when the terminal moves from one cell to another cell, the first configuration information in the SRS configuration information may be automatically updated, and the SRS may be transmitted in the at least two cells based on the second configuration information, so that the power consumption can be saved and the endurance capability of the terminal can be prolonged compared with a manner in which the SRS configuration information need to be re-obtained when the terminal moves from one cell to another cell.

### BRIEF DESCRIPTION OF THE DRAWINGS

FIG. 1 is a schematic structural diagram of a wireless communication system according to an example embodiment.
FIG. 2 is a schematic flowchart of a method for updating SRS configuration information according to an example embodiment.
FIG. 3 is a schematic flowchart of a method for updating SRS configuration information according to an example embodiment.
FIG. 4 is a schematic flowchart of a method for updating SRS configuration information according to an example embodiment.
FIG. 5 is a schematic flowchart of a method for updating SRS configuration information according to an example embodiment.
FIG. 6 is a schematic flowchart of a method for updating SRS configuration information according to an example embodiment.
FIG. 7 is a schematic flowchart of a method for updating SRS configuration information according to an example embodiment.
FIG. 8 is a schematic flowchart of a method for updating SRS configuration information according to an example embodiment.
FIG. 9 is a schematic flowchart of a method for updating SRS configuration information according to an example embodiment.
FIG. 10 is a schematic flowchart of a method for updating SRS configuration information according to an example embodiment.
FIG. 11 is a schematic flowchart of a method for updating SRS configuration information according to an example embodiment.
FIG. 12 is a schematic flowchart of a method for updating SRS configuration information according to an example embodiment.
FIG. 13 is a schematic diagram of an apparatus for updating SRS configuration information according to an example embodiment.
FIG. 14 is a schematic diagram of an apparatus for updating SRS configuration information according to an example embodiment.
FIG. 15 is a schematic structural diagram of a terminal according to an example embodiment.
FIG. 16 is a block diagram of a base station according to an example embodiment.

### DETAILED DESCRIPTION

Example embodiments will be described in detail here, examples of which are illustrated in the accompanying drawings. The following description refers to the accompanying drawings in which the same numbers in different drawings represent the same or similar elements unless otherwise represented. The implementations described in the following example embodiments do not represent all implementations consistent with the embodiments of the present disclosure. Instead, they are merely examples of apparatuses and methods consistent with some aspects of the embodiments of the present disclosure as detailed in the appended claims.

The terms used in the embodiments of the present disclosure are merely for the purpose of describing particular embodiments, and are not intended to limit the embodiments of the present disclosure. The singular forms "a" and "the" used in the embodiments of the present disclosure and the appended claims are also intended to include plural forms, unless the context clearly indicates other meanings. It should also be understood that the term "and/or" as used here refers to and includes any or all possible combinations of one or more associated listed items.

It should be understood that although the terms "first", "second", "third", or the like, may be used in the embodiments of the present disclosure to describe various information, these information should not be limited to these terms. These terms are only used to distinguish the same type of information from each other. For example, without departing from the scope of the embodiments of the present disclosure, first information may also be referred to as second information, and similarly, second information may also be referred to as first information. Depending on the context, the word "if" as used here may be interpreted as " at the time..." or " when..." or "in response to determining...".

For purposes of brevity and ease of understanding, when a size relationship is represented, the terms used here are "greater than" or "less than". However, for those skilled in the art, it may be understood that the term "greater than" also covers a meaning of "greater than or equal to", and "less than" also covers a meaning of "less than or equal to".

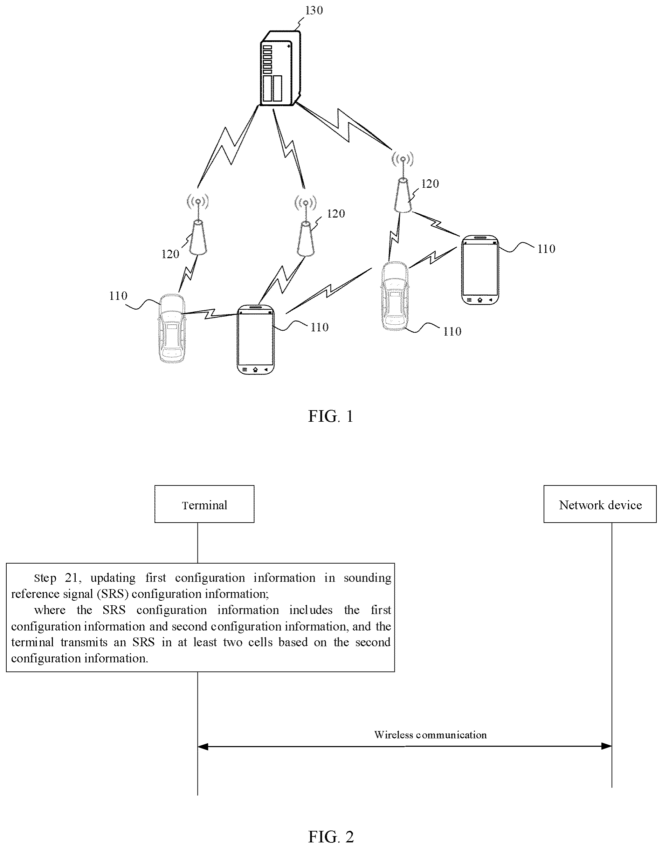

Referring to FIG. 1, it shows a schematic structural diagram of a wireless communication system according to an embodiment of the present disclosure. As shown in FIG. 1, the wireless communication system is a communication system based on a mobile communication technology, and the wireless communication system may include several user equipment 110 and several base station 120.

Among them, the user equipment 110 may be a device that provides voice and/or data connectivity to a user. The user equipment 110 may communicate with one or more core networks via a radio access network (RAN). The user equipment 110 may be Internet of Things user equipment, such as a sensor device, a mobile phone, or a computer having Internet of Things user equipment. For example, the user equipment 110 may a fixed apparatus, portable apparatus, pocket-sized apparatus, hand-held apparatus, computer-built-in apparatus, or vehicle-mounted apparatus, such as a station (STA), a subscriber unit, a subscriber station, a mobile station, a mobile, a remote station, an access point, a remote terminal, an access terminal, a user terminal, a user agent, a user device, or user equipment. Alternatively, the user equipment 110 may also be a device of an unmanned aerial vehicle. Alternatively, the user equipment 110 may be a vehicle-mounted device, for example, may be a trip computer having a wireless communication function, or wireless user equipment externally connected to a trip computer. Alternatively, the user equipment 110 may be an infrastructure device, for example, may be a street lamp, a signal lamp, or another infrastructure device having a wireless communication function.

The base station 120 may be a network side device in a wireless communication system. Among then, the wireless communication system may be the 4th generation mobile communication (4G) system, which is also referred to as a Long Term Evolution (LTE) system. Alternatively, the wireless communication system may be the 5G system, which is also referred to as a new radio system, or a 5G NR system. Alternatively, the wireless communication system may be a next-generation system of the 5G system. Among then, the access network in the 5G system may be referred to as a new generation-radio access network (NG-RAN).

Among them, the base station 120 may be an evolved base station (eNB) used in the 4G system. Alternatively, the base station 120 may also be a base station (gNB) adopting a centralized distributed architecture in the 5G system. When the base station 120 adopts a centralized distributed architecture, the base station 120 usually includes a central unit (CU) and at least two distributed units (DU). A protocol stack for the packet data convergence protocol (PDCP) layer, the radio link control protocol (RLC) layer, and the media access control (MAC) layer is provided in the centralized unit. A protocol stack for the physical (PHY) layer is provided in the distributed unit. The specific implementation of the base station 120 is not limited in the embodiments of the present disclosure.

A wireless connection may be established between the base station 120 and the user equipment 110 through a wireless air interface. In different embodiments, the wireless air interface may be a wireless air interface based on the 4th generation mobile communication network technology (4G) standard. Alternatively, the wireless air interface may be a wireless air interface based on the 5th generation mobile communication network technology (5G) standard, for example, the wireless air interface is a new radio. Alternatively, the wireless air interface may be a wireless air interface based on a next-generation of 5G mobile communication network technology standard.

In some embodiments, an E2E (end to end) connection may also be established between the user equipment 110, for example, in a scenario of vehicle to vehicle (V2V) communication, vehicle to infrastructure (V2I) communication, or vehicle to pedestrian (V2P) communication in vehicle to everything (V2X) communication.

Here, the user equipment may be considered as the terminal device in the following embodiments.

In some embodiments, the wireless communication system may further include a network management device 130.

Several base stations 120 are respectively connected to the network management device 130. Among them, the network management device 130 may be a core network device in the wireless communication system. For example, the network management device 130 may be a mobility management entity (MME) in an evolved packet core (EPC). Alternatively, the network management device may be another core network device, such as a serving gateway (SGW), a public data network gateway (PGW), a policy and charging rules function (PCRF), or a home subscriber server (HSS). The implementation form of the network management device 130 is not limited in the embodiments of the present disclosure.

In order to facilitate the understanding of those skilled in the art, a plurality of implementations is listed in the embodiments of the present disclosure to clearly illustrate the technical solutions of the embodiments of the present disclosure. Certainly, those skilled in the art may understand that the plurality of embodiments provided in the embodiments of the present disclosure may be separately executed, or may be executed after being combined with the methods of other embodiments in the embodiments of the present disclosure, or may be performed, separately or after being combined, together with some methods in other related technologies, which is not limited in the embodiments of the present disclosure.

As shown in FIG. 2, the embodiment provides a method for updating SRS configuration information, where the method is performed by a terminal, and the method includes the following step.

In step 21, first configuration information in sounding reference signal (SRS) configuration information is updated;
where the SRS configuration information includes the first configuration information and second configuration information, and the terminal transmits an SRS in at least two cells based on the second configuration information.

Here, the terminal involved in the present disclosure may be, but is not limited to, a mobile phone, a wearable device, a vehicle-mounted terminal, a roadside unit (RSU), a smart home terminal, an industrial sensing device, and/or a medical device. In some embodiments, the terminal may be a Redcap terminal or a new radio (NR) terminal in a predetermined version (for example, an NR terminal in R17).

The network device involved in the present disclosure may also be an access network device or a core network device. The access network device may be a base station. The core network device may be a first network function, and the first network function may be a location management function network element. For example, the location management function network element includes a location server, and the location server may be implemented as any one of a location management function (LMF), an enhanced serving mobile location center (E-SMLC), a secure user plane location (SUPL), or a SUPL location platform (SULLP).

In an embodiment of the present disclosure, the sounding reference signal configuration information may be used to perform SRS resource configuration. For example, it may be an SRS-resource information element or an SRS-PosResource information element, where a plurality of specific pieces of configuration information or configuration items may be included.

In an embodiment, in a scenario in which a terminal is located, first configuration information in the sounding reference signal (SRS) configuration information is updated, where the SRS configuration information includes the first configuration information and second configuration information, and the terminal transmits an SRS in at least two cells based on the second configuration information. It may be understood that the second configuration information is applicable to at least two cells, that is, the terminal transmits the SRS in at least two cells based on the same second configuration information.

In an embodiment, in response to the terminal moving from a first cell to a second cell, the first configuration information in the sounding reference signal (SRS) configuration information is updated, where the SRS configuration information includes the first configuration information and the second configuration information, and the terminal transmits an SRS in at least two cells based on the second configuration information. It may be understood that, the first configuration information may be different when the terminal is located in different cells (for example, the first cell and the second cell), so that the terminal needs to update the first configuration information. That is, the terminal transmits the SRS in different cells based on different first configuration information.

In an embodiment, in response to a change amount of a measurement value being greater than or equal to a first threshold, the first configuration information in the SRS configuration information is updated, where the SRS configuration information includes the first configuration information and the second configuration information, and the terminal transmits an SRS in at least two cells based on the second configuration information. It may be understood that a change in the measurement value may be caused due to the movement of the terminal. The first configuration information may also be different when the terminal is located at different positions in the same cell, so that the terminal needs to update the first configuration information. That is, the terminal transmits the SRS at different positions in the same cell based on different first configuration information.

In an embodiment, the first threshold is determined based on third specified information sent by a network device; and/or the first threshold is determined based on predetermined protocol information. The network device is an access network device or an LMF. It should be noted that the third specified information may be sent to the terminal before the first configuration information is updated. In a case that the network device is an LMF, the third specified information may be sent by using an LTE positioning protocol (LPP) message. In a case that the network device is an access network device, the third specified information may be sent by using a system information broadcast, a radio resource control (RRC) message, or a medium access control (MAC) control element (CE).

In an embodiment, in response to a change amount of a measurement value being greater than or equal to a first threshold, the first configuration information in the SRS configuration information is updated, where the SRS configuration information includes the first configuration information and the second configuration information, and the terminal transmits an SRS in at least two cells based on the second configuration information. The measurement value includes at least one of a reference signal receiving power (RSRP), a reference signal receiving quality (RSRQ), or a signal to interference plus noise ratio (SINR).

It should be noted that the measurement value in the present disclosure may also be a measurement value of L1 and/or L3. For example, the measurement value includes at least one of L1-RSRP, L1-RSRQ, L1-SINR, L3-RSRP, L3-RSRQ, or L3-SINR, which is not limited here. In an embodiment, the measurement value of L3 may be a measurement result of radio resource management (RRM). It should be noted that the L1-RSRP is an RSRP measured at the L1 layer, and the other is similar correspondingly.

In an embodiment, in response to a change amount of a measurement value being greater than or equal to a first threshold, the first configuration information in the SRS configuration information is updated, where the SRS configuration information includes the first configuration information and the second configuration information, and the terminal transmits an SRS in at least two cells based on the second configuration information. The measurement value is a measurement value determined based on a reference signal, and the reference signal is a synchronization signal/PBCH block (SSB) or a channel state information reference signal (CSI-RS). The CSI-RS may include a phase tracking reference signal and/or a tracking reference signal.

In an embodiment, in response to a change amount of a measurement value being greater than or equal to a first threshold, the first configuration information in the SRS configuration information is updated, where the SRS configuration information includes the first configuration information and the second configuration information, and the terminal transmits an SRS in at least two cells based on the second configuration information. The measurement value is a measurement value determined based on a reference signal, and the reference signal is an SSB or a CSI-R. The reference signal is determined as a pathloss reference signal (pathloss RS), a reference signal indicated by transmission configuration indication state (TCI state) information and/or a reference signal indicated by spatial relation information. The CSI-RS may include a phase tracking reference signal and/or a tracking reference signal. Among them, it may be determined by the terminal based on the first configuration information sent by the network device or determined when the terminal updates the first configuration information that the reference signal is determined as a pathloss reference signal (pathloss RS), a reference signal indicated by transmission configuration indication state (TCI state) information and/or a reference signal indicated by spatial relation information.

In an embodiment, in response to the terminal performing cell reselection, the first configuration information in the SRS configuration information is updated, where the SRS configuration information includes the first configuration information and the second configuration information, and the terminal transmits an SRS in at least two cells based on the second configuration information.

In an embodiment, the first configuration information in the SRS configuration information is updated, where the SRS configuration information includes the first configuration information and the second configuration information, and the terminal transmits an SRS in at least two cells based on the second configuration information. The first configuration information includes at least one of uplink beam information, timing advance (TA) information, pathloss reference signal information, or power control related parameter information.

Here, the power control related parameter information may be P0 and/or alpha.

It should be noted that the uplink beam information may be referred to as spatial relation information, an uplink transmission configuration indication (TCI) state, or a spatial transmission filter.

In an embodiment, the first configuration information in the SRS configuration information is updated, where the SRS configuration information includes the first configuration information and the second configuration information, and the terminal transmits an SRS in at least two cells based on the second configuration information. The second configuration information includes at least one of time domain parameter information, frequency domain parameter information, comb parameter information, or power control related parameter information.

In an embodiment, the time domain parameter information indicates at least one of the following parameters: a period, a slot shift value, a start symbol position, a number of symbols, or a number of repetitions.

In an embodiment, the frequency domain parameter information indicates at least one of the following parameters: a frequency domain position (freqDomainPosition), a frequency domain shift (freqDomainShift), or a frequency hopping (freqHopping).

In an embodiment, the comb parameter information indicates at least one of the following parameters: a comb offset (combOffset) or a cyclic shift (cyclic Shift).

In an embodiment, the first configuration information in the sounding reference signal (SRS) configuration information is updated based on a first reference signal, where the SRS configuration information includes the first configuration information and the second configuration information, and the terminal transmits an SRS in at least two cells based on the second configuration information.

In an embodiment, the first reference signal is one of the following:
a synchronization signal/PBCH block (SSB);
a channel state information reference signal (CSI-RS);
a phase tracking reference signal; or
a tracking reference signal.

In the embodiments of the present disclosure, a measurement value corresponding to the first reference signal is greater than a measurement value corresponding to a second reference signal, where the reference signal may include the first reference signal and the second reference signal, and the second reference signal may be a reference signal other than the first reference signal in the reference signal. The first reference signal and the second reference signal may be reference signals of a same type, for example, both are SSBs.

For example, a measurement value corresponding to the first reference signal is greater than a measurement value corresponding to a reference signal other than the first reference signal in the reference signal. For example, the reference signal includes a first SSB and a second SSB, the first reference signal is the first SSB, and the second reference signal is the second SSB. Here, the measurement value corresponding to the first SSB may be greater than the measurement value corresponding to the second SSB. Certainly, the reference signal is not limited to an SSB, and it may be another reference signal, such as a CSI-RS, a phase tracking reference signal, a tracking reference signal, or the like, which is not limited here.

It should be noted that, in the present disclosure, it is described that the first configuration information in the sounding reference signal (SRS) configuration information is updated based on the first reference signal by taking that the first reference signal is the first SSB as an example, however, the scenario applicable to the first SSB is also applicable to a channel state information reference signal (CSI-RS), a phase tracking reference signal or a tracking reference signal. That is, in the present disclosure, the first SSB may be replaced by a channel state information reference signal (CSI-RS), a phase tracking reference signal, or a tracking reference signal.

In an embodiment, the first configuration information in the sounding reference signal (SRS) configuration information is updated based on a first SSB, where the SRS configuration information includes the first configuration information and the second configuration information, and the terminal transmits an SRS in at least two cells based on the second configuration information.

In an embodiment, the first configuration information in the sounding reference signal (SRS) configuration information is updated based on a first SSB, where the SRS configuration information includes the first configuration information and the second configuration information, and the terminal transmits an SRS in at least two cells based on the second configuration information. A measurement value corresponding to the first SSB is greater than a second threshold; or, the measurement value corresponding to the first SSB is greater than a measurement value corresponding to a second SSB, where the measurement value includes at least one of an RSRP, an RSRQ, or an SINR. For example, the measurement value includes at least one of L1-RSRP, L1-RSRQ, L1-SINR, L3-RSRP, L3-RSRQ, or L3-SINR.

For example, the measurement value corresponding to the first SSB may be a maximum measurement value among measurement values corresponding to all SSBs, but is not limited to the maximum measurement value.

In an embodiment, the first configuration information in the sounding reference signal (SRS) configuration information is updated based on a first SSB, where the SRS configuration information includes the first configuration information and the second configuration information, and the terminal transmits an SRS in at least two cells based on the second configuration information. Updating the first configuration information based on the first SSB includes: updating an uplink beam of the SRS as a beam corresponding to the first SSB. It may also be understood that the SRS is updated as being in a quasi-co location type D relationship with the first SSB.

In an embodiment, the first configuration information in the sounding reference signal (SRS) configuration information is updated based on a first SSB, where the SRS configuration information includes the first configuration information and the second configuration information, and the terminal transmits an SRS in at least two cells based on the second configuration information. Updating the first configuration information based on the first SSB includes: updating a pathloss reference signal of the SRS as the first SSB.

In an embodiment, the first configuration information in the sounding reference signal (SRS) configuration information is updated based on a first SSB, where the SRS configuration information includes the first configuration information and the second configuration information, and the terminal transmits an SRS in at least two cells based on the second configuration information. Updating the first configuration information based on the first SSB includes: updating the pathloss reference signal of the SRS as at least two first SSBs.

In an embodiment, there are at least two first SSBs, and the number of the first SSBs is determined based on first specified information sent by a network device or predetermined protocol information, where the network device is an access network device or a location management function (LMF). The first configuration information in the sounding reference signal (SRS) configuration information is updated based on a first SSB, where the SRS configuration information includes the first configuration information and the second configuration information, and the terminal transmits an SRS in at least two cells based on the second configuration information. Updating the first configuration information based on the first SSB includes: updating a pathloss reference signal of the SRS as the at least two first SSBs. In a case that the network device is an LMF, the first specified information may be sent by using an LTE positioning protocol (LPP) message. In a case that the network device is an access network device, the first specified information may be sent by using a system information broadcast, a radio resource control (RRC) message, or a medium access control (MAC) control element (CE).

In an embodiment, there are at least two first SSBs, and the number of the first SSBs is determined based on first information sent by a network device or predetermined protocol information, where the network device is an access network device or a location management function (LMF). The first configuration information in the sounding reference signal (SRS) configuration information is updated based on a first SSB, where the SRS configuration information includes the first configuration information and the second configuration information, and the terminal transmits an SRS in at least two cells based on the second configuration information. Updating the first configuration information based on the first SSB includes: updating a pathloss reference signal of the SRS as the at least two first SSBs. A pathloss is determined based on an average value of measurement values corresponding to the at least two first SSBs, where the measurement value includes at least one of an RSRP, an RSRQ, or an SINR. For example, the measurement value includes at least one of L1-RSRP, L1-RSRQ, L1-SINR, L3-RSRP, L3-RSRQ, or L3-SINR.

It should be noted that, when there is a plurality of first SSBs, it is not needed to determine a pathloss reference signal (pathloss RS), because it is actually to determine a measurement value corresponding to the pathloss RS when the pathloss RS is determined, and in this case, the pathloss may be directly determined based on the average measurement value of the plurality of SSBs. It should be noted that the plurality of SSBs (for example, the plurality of first SSBs) may refer to that the measurement value of each SSB in the plurality of SSBs is higher than a threshold, or the plurality of SSBs are the N SSBs (the top N SSBs in an arrange according to a descending order) with the strongest measurement quality (which may be a measurement value based on a beam) in all SSBs, where the measurement value includes at least one of an RSRP, an RSRQ, or an SINR. For example, the measurement value includes at least one of L1-RSRP, L1-RSRQ, L1-SINR, L3-RSRP, L3-RSRQ, or L3-SINR.

In an embodiment, the first configuration information in the sounding reference signal (SRS) configuration information is updated based on a first SSB, where the SRS configuration information includes the first configuration information and the second configuration information, and the terminal transmits an SRS in at least two cells based on the second configuration information. Updating the first configuration information based on the first SSB includes: updating a TA configured by the first configuration information based on a mapping relationship and a measurement value corresponding to the first SSB, where the mapping relationship is a relationship between a TA and a measurement value corresponding to the SSB, or the mapping relationship is a relationship between a TA adjustment value and a change value of a measurement value corresponding to the SSB. The measurement value includes at least one of an RSRP, an RSRQ, or an SINR. For example, the measurement value includes at least one of L1-RSRP, L1-RSRQ, L1-SINR, L3-RSRP, L3-RSRQ, or L3-SINR.

In an embodiment, the first configuration information in the sounding reference signal (SRS) configuration information is updated based on a first SSB, where the SRS configuration information includes the first configuration information and the second configuration information, and the terminal transmits an SRS in at least two cells based on the second configuration information. Updating the first configuration information based on the first SSB includes: updating a TA configured by the first configuration information based on a mapping relationship and a measurement value corresponding to the first SSB, where the mapping relationship is a relationship between a TA and a measurement value corresponding to the SSB, or the mapping relationship is a relationship between a TA adjustment value and a change value of a measurement value corresponding to the SSB. The measurement value includes at least one of an RSRP, an RSRQ, or an SINR. For example, the measurement value includes at least one of L1-RSRP, L1-RSRQ, L1-SINR, L3-RSRP, L3-RSRQ, or L3-SINR.

For example, if the change of the measurement value is X dB, the change of the TA is Y us. Based on this change rule, the mapping relationship between the measurement value and the TA may be determined. After the current measurement value is obtained, the TA corresponding to the measurement value may be determined based on the measurement value and the mapping relationship. It may be understood that, when the measurement value increases, the TA decreases; and, when the measurement value decreases, the TA increases.

In an embodiment, the mapping relationship is determined based on second specified information sent by the network device or predetermined protocol information. The mapping relationship is a relationship between a TA and a measurement value corresponding to an SSB, or the mapping relationship is a relationship between a TA adjustment value and a change value of a measurement value corresponding to an SSB, where the measurement value includes at least one of an RSRP, an RSRQ, or an SINR. For example, the measurement value includes at least one of L1-RSRP, L1-RSRQ, L1-SINR, L3-RSRP, L3-RSRQ, or L3-SINR. Among them, the network device is an access network device or an LMF. The first configuration information in the sounding reference signal (SRS) configuration information is updated based on a first SSB, where the SRS configuration information includes the first configuration information and the second configuration information, and the terminal transmits an SRS in at least two cells based on the second configuration information. Updating the first configuration information based on the first SSB includes: updating a TA configured by the first configuration information based on the mapping relationship and the measurement value corresponding to the first SSB. There are at least two first SSBs, and the measurement value of the first SSB is determined based on an average value of the measurement values corresponding to the at least two first SSBs.

It should be noted that the plurality of SSBs (for example, the plurality of first SSBs) may refer to that the measurement value of each SSB in the plurality of SSBs is higher than a threshold, or the plurality of SSBs are the N SSBs (the top N SSBs in an arrange according to a descending order) with the strongest measurement quality (which may be a measurement value based on a beam) in all SSBs, where the measurement value includes at least one of an RSRP, an RSRQ, or an SINR. In a case that the network device is an LMF, the second specified information may be sent by using a LTE positioning protocol (LPP) message. In a case that the network device is an access network device, the second specified information may be sent by using a system information broadcast, a radio resource control (RRC) message, or a medium access control (MAC) control element (CE). In the embodiments of the present disclosure, the first configuration information in the sounding reference signal (SRS) configuration information is updated, where the SRS configuration information includes the first configuration information and the second configuration information, and the terminal transmits an SRS in at least two cells based on the second configuration information. Here, since the terminal may update the first configuration information in the SRS configuration information, when the terminal moves from one cell to another cell, the first configuration information in the SRS configuration information may be automatically updated, and the SRS may be transmitted in the at least two cells based on the second configuration information, so that the power consumption can be saved and the endurance capability of the terminal can be prolonged compared with a manner in which the SRS configuration information need to be re-obtained when the terminal moves from one cell to another cell.

It should be noted that those skilled in the art may understand that the method provided in the embodiments of the present disclosure may be performed separately, or may be performed with some methods in the embodiments of the present disclosure or some methods in the related art.

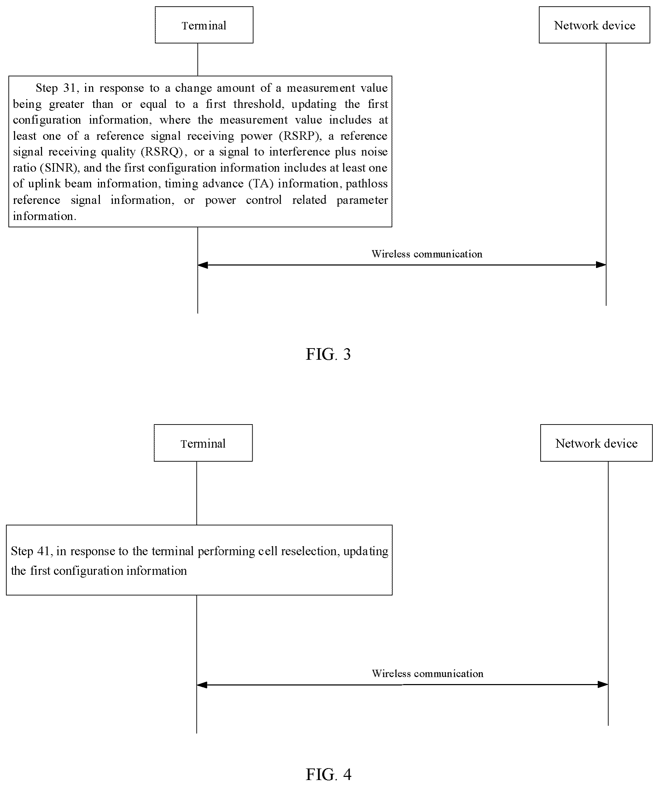

As shown in FIG. 3, according to an embodiment of the present disclosure, there is provided a method for updating SRS configuration information, where the method is performed by a terminal, and the method includes the following step.

In step 31, in response to a change amount of a measurement value being greater than or equal to a first threshold, the first configuration information is updated.

Among them, the measurement value includes at least one of a reference signal receiving power (RSRP), a reference signal receiving quality (RSRQ), or a signal to interference plus noise ratio (SINR). The first configuration information includes at least one of uplink beam information, timing advance (TA) information, pathloss reference signal information, or power control related parameter information.

In an embodiment, the measurement value includes at least one of L1-RSRP, L1-RSRQ, L1-SINR, L3-RSRP, L3-RSRQ, or L3-SINR, which is not limited here.

In an embodiment, the terminal may obtain the measurement value according to a predetermined period and obtain the change amount based on the measurement value.

In an embodiment, the first threshold is determined based on third specified information sent by a network device; and/or, the first threshold is determined based on predetermined protocol information. The network device is an access network device or an LMF. In a case that the network device is an LMF, the third specified information may be sent by using a LTE positioning protocol (LPP) message. In a case that the network device is an access network device, the third specified information may be sent by using a system information broadcast, a radio resource control (RRC) message, or a medium access control (MAC) control element (CE).

In an embodiment, in response to a change amount of a measurement value being greater than or equal to a first threshold, the first configuration information in the SRS configuration information is updated, where the SRS configuration information includes the first configuration information and the second configuration information, and the terminal transmits an SRS in at least two cells based on the second configuration information. The first configuration information includes at least one of uplink beam information, timing advance (TA) information, pathloss reference signal information, or power control related parameter information. It may be understood that a change in the measurement value may be caused due to the movement of the terminal. The first configuration information may also be different when the terminal is located at different positions in the same cell, so that the terminal needs to update the first configuration information. That is, the terminal transmits the SRS at different positions in the same cell based on different first configuration information.

In an embodiment, in response to a change amount of a measurement value being greater than or equal to a first threshold, the first configuration information in the SRS configuration information is updated, where the SRS configuration information includes the first configuration information and the second configuration information, and the terminal transmits an SRS in at least two cells based on the second configuration information. The measurement value includes at least one of a reference signal receiving power (RSRP), a reference signal receiving quality (RSRQ), and a signal to interference plus noise ratio (SINR). The first configuration information includes at least one of uplink beam information, timing advance (TA) information, pathloss reference signal information, or power control related parameter information. The measurement value includes at least one of L1-RSRP, L1-RSRQ, L1-SINR, L3-RSRP, L3-RSRQ, or L3-SINR, which is not limited here.

In an embodiment, in response to a change amount of a measurement value being greater than or equal to a first threshold, the first configuration information in the SRS configuration information is updated, where the SRS configuration information includes the first configuration information and the second configuration information, and the terminal transmits an SRS in at least two cells based on the second configuration information. The measurement value is a measurement value determined based on a reference signal, and the reference signal is an SSB or a CSI-RS. The first configuration information includes at least one of uplink beam information, timing advance (TA) information, pathloss reference signal information, or power control related parameter information. The CSI-RS may include a phase tracking reference signal and/or a tracking reference signal.

In an embodiment, in response to a change amount of a measurement value being greater than or equal to a first threshold, the first configuration information in the SRS configuration information is updated, where the SRS configuration information includes the first configuration information and the second configuration information, and the terminal transmits an SRS in at least two cells based on the second configuration information. The measurement value is a measurement value determined based on a reference signal, and the reference signal is an SSB or a CSI-RS. The reference signal is determined as a pathloss reference signal (pathloss RS), a reference signal indicated by transmission configuration indication state (TCI state) information, and/or a reference signal indicated by spatial relation information. The first configuration information includes at least one of uplink beam information, timing advance TA information, pathloss reference signal information, or power control related parameter information. The CSI-RS may include a phase tracking reference signal and/or a tracking reference signal. Among them, it may be determined by the terminal based on the first configuration information sent by the network device or determined when the terminal updates the first configuration information that the reference signal is determined as a pathloss reference signal (pathloss RS), a reference signal indicated by transmission configuration indication state (TCI state) information and/or a reference signal indicated by spatial relation information.

It should be noted that those skilled in the art may understand that the method provided in the embodiments of the present disclosure may be performed separately, or may be performed with some methods in the embodiments of the present disclosure or some methods in the related art.

As shown in FIG. 4, according to an embodiment of the present disclosure, there is provided a method for updating SRS configuration information, where the method is performed by a terminal, and the method includes the following step.

In step 41, in response to the terminal performing cell reselection, the first configuration information is updated.

In an embodiment, in response to the terminal performing cell reselection, the first configuration information in the SRS configuration information is updated, where the SRS configuration information includes the first configuration information and the second configuration information, and the terminal transmits an SRS in at least two cells based on the second configuration information.

In an embodiment, in response to the terminal performing cell reselection, the first configuration information in the SRS configuration information is updated, where the SRS configuration information includes the first configuration information and the second configuration information, and the terminal transmits an SRS in at least two cells based on the second configuration information. The first configuration information includes at least one of uplink beam information, timing advance (TA) information, pathloss reference signal information, or power control related parameter information.

It should be noted that those skilled in the art may understand that the method provided in the embodiments of the present disclosure may be performed separately, or may be performed with some methods in the embodiments of the present disclosure or some methods in the related art.

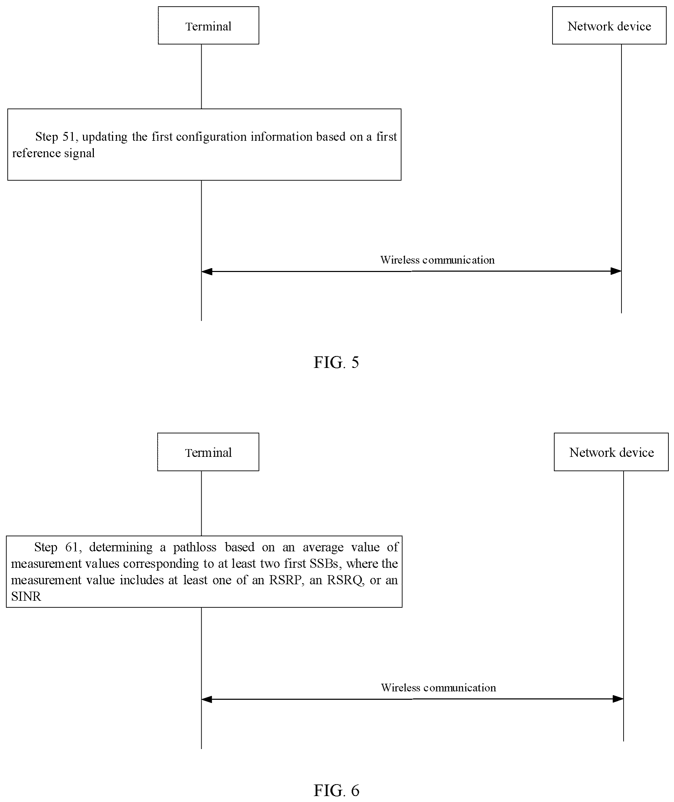

As shown in FIG. 5, according to an embodiment of the present disclosure, there is provided a method for updating SRS configuration information, where the method is performed by a terminal, and the method includes the following step.

In step 51, the first configuration information is updated based on a first reference signal.

In an embodiment, the first configuration information in the sounding reference signal (SRS) configuration information is updated based on a first reference signal, where the SRS configuration information includes the first configuration information and the second configuration information, and the terminal transmits an SRS in at least two cells based on the second configuration information.

In an embodiment, the first reference signal is one of the following:
a synchronization signal/PBCH block (SSB);
a channel state information reference signal (CSI-RS);
a phase tracking reference signal; or
a tracking reference signal.

It should be noted that, in the present disclosure, it is described that the first configuration information in the sounding reference signal (SRS) configuration information is updated based on the first reference signal by taking that the first reference signal is the first SSB as an example, however, the scenario applicable to the first SSB is also applicable to a channel state information reference signal (CSI-RS), a phase tracking reference signal or a tracking reference signal. That is, in the present disclosure, the first SSB may be replaced by a channel state information reference signal (CSI-RS), a phase tracking reference signal, or a tracking reference signal.

In an embodiment, the first configuration information in the sounding reference signal (SRS) configuration information is updated based on a first SSB, where the SRS configuration information includes the first configuration information and the second configuration information, and the terminal transmits an SRS in at least two cells based on the second configuration information.

In an embodiment, the first configuration information in the sounding reference signal (SRS) configuration information is updated based on a first SSB, where the SRS configuration information includes the first configuration information and the second configuration information, and the terminal transmits an SRS in at least two cells based on the second configuration information. A measurement value corresponding to the first SSB is greater than a second threshold; or, the measurement value corresponding to the first SSB is greater than a measurement value corresponding to a second SSB, where the measurement value includes at least one of an RSRP, an RSRQ, or an SINR. For example, the measurement value includes at least one of L1-RSRP, L1-RSRQ, L1-SINR, L3-RSRP, L3-RSRQ, or L3-SINR.

In an embodiment, the first configuration information in the sounding reference signal (SRS) configuration information is updated based on a first SSB, where the SRS configuration information includes the first configuration information and the second configuration information, and the terminal transmits an SRS in at least two cells based on the second configuration information. Updating the first configuration information based on the first SSB includes: updating an uplink beam of the SRS as a beam corresponding to the first SSB. It may also be understood that the SRS is updated as being in a quasi-co location type D relationship with the first SSB.

In an embodiment, the first configuration information in the sounding reference signal (SRS) configuration information is updated based on a first SSB, where the SRS configuration information includes the first configuration information and the second configuration information, and the terminal transmits an SRS in at least two cells based on the second configuration information. Updating the first configuration information based on the first SSB includes: updating a pathloss reference signal of the SRS as the first SSB.

In an embodiment, the first configuration information in the sounding reference signal (SRS) configuration information is updated based on a first SSB, where the SRS configuration information includes the first configuration information and the second configuration information, and the terminal transmits an SRS in at least two cells based on the second configuration information. Updating the first configuration information based on the first SSB includes: updating the pathloss reference signal of the SRS as at least two first SSBs.

In an embodiment, there are at least two first SSBs, and the number of the first SSBs is determined based on first specified information sent by a network device or predetermined protocol information, where the network device is an access network device or a location management function (LMF). The first configuration information in the sounding reference signal (SRS) configuration information is updated based on a first SSB, where the SRS configuration information includes the first configuration information and the second configuration information, and the terminal transmits an SRS in at least two cells based on the second configuration information. Updating the first configuration information based on the first SSB includes: updating a pathloss reference signal of the SRS as the at least two first SSBs. In a case that the network device is an LMF, the first specified information may be sent by using an LTE positioning protocol (LPP) message. In a case that the network device is an access network device, the first specified information may be sent by using a system information broadcast, a radio resource control (RRC) message, or a medium access control (MAC) control element (CE). In an embodiment, there are at least two first SSBs, and the number of the first SSBs is determined based on first specified information sent by a network device or predetermined protocol information, where the network device is an access network device or a location management function (LMF). The first configuration information in the sounding reference signal (SRS) configuration information is updated based on a first SSB, where the SRS configuration information includes the first configuration information and the second configuration information, and the terminal transmits an SRS in at least two cells based on the second configuration information. Updating the first configuration information based on the first SSB includes: updating a pathloss reference signal of the SRS as the at least two first SSBs. A pathloss is determined based on an average value of measurement values corresponding to the at least two first SSBs, where the measurement value includes at least one of an RSRP, an RSRQ, or an SINR. For example, the measurement value includes at least one of L1-RSRP, L1-RSRQ, L1-SINR, L3-RSRP, L3-RSRQ, or L3-SINR. In an embodiment, the first configuration information in the sounding reference signal (SRS) configuration information is updated based on a first SSB, where the SRS configuration information includes the first configuration information and the second configuration information, and the terminal transmits an SRS in at least two cells based on the second configuration information. Updating the first configuration information based on the first SSB includes: updating a TA configured by the first configuration information based on a mapping relationship and a measurement value corresponding to the first SSB, where the mapping relationship is a relationship between a TA and a measurement value corresponding to the SSB, or the mapping relationship is a relationship between a TA adjustment value and a change value of a measurement value corresponding to the SSB. The measurement value includes at least one of an RSRP, an RSRQ, or an SINR. For example, the measurement value includes at least one of L1-RSRP, L1-RSRQ, L1-SINR, L3-RSRP, L3-RSRQ, or L3-SINR.

In an embodiment, the mapping relationship is determined based on second specified information sent by the network device or predetermined protocol information. The mapping relationship is a relationship between a TA and a measurement value corresponding to an SSB, or the mapping relationship is a relationship between a TA adjustment value and a change value of a measurement value corresponding to an SSB, where the measurement value includes at least one of an RSRP, an RSRQ, or an SINR, and the network device is an access network device or an LMF. The first configuration information in the sounding reference signal (SRS) configuration information is updated based on a first SSB, where the SRS configuration information includes the first configuration information and the second configuration information, and the terminal transmits an SRS in at least two cells based on the second configuration information. Updating the first configuration information based on the first SSB includes: updating a TA configured by the first configuration information based on the mapping relationship and the measurement value corresponding to the first SSB. There are at least two first SSBs, and the measurement value of the first SSB is determined based on an average value of the measurement values corresponding to the at least two first SSBs. In a case that the network device is an LMF, the second specified information may be sent by using an LTE positioning protocol (LPP) message. In a case that the network device is an access network device, the second specified information may be sent by using a system information broadcast, a radio resource control (RRC) message, or a medium access control (MAC) control element (CE).

It should be noted that those skilled in the art may understand that the method provided in the embodiments of the present disclosure may be performed separately, or may be performed with some methods in the embodiments of the present disclosure or some methods in the related art.

As shown in FIG. 6, according to an embodiment of the present disclosure, there is provided a method for updating SRS configuration information, where the method is performed by a terminal, and the method includes the following step.

In step 61, a pathloss is determined based on an average value of measurement values corresponding to at least two first SSBs.

Among them, the measurement value includes at least one of an RSRP, an RSRQ, or an SINR.

In an embodiment, the measurement value includes at least one of L1-RSRP, L1-RSRQ, L1-SINR, L3-RSRP, L3-RSRQ, or L3-SINR.

In an embodiment, a pathloss is determined based on an average value of measurement values corresponding to at least two first SSBs, where the measurement value includes at least one of an RSRP, an RSRQ, or an SINR. The measurement value corresponding to the first SSB is greater than a second threshold; or, the measurement value corresponding to the first SSB is greater than a measurement value corresponding to a second SSB, where the measurement value includes at least one of an RSRP, an RSRQ, or an SINR.

In an embodiment, there are at least two first SSB, and the number of the first SSBs is determined based on first specified information sent by a network device or predetermined protocol information, where the network device is an access network device or a location management function (LMF). The first configuration information in the sounding reference signal (SRS) configuration information is updated based on a first SSB, where the SRS configuration information includes the first configuration information and the second configuration information, and the terminal transmits an SRS in at least two cells based on the second configuration information. Updating the first configuration information based on the first SSB includes: updating a pathloss reference signal of the SRS as the at least two first SSBs. A pathloss is determined based on an average value of measurement values corresponding to the at least two first SSBs, where the measurement value includes at least one of an RSRP, an RSRQ, or an SINR. In a case that the network device is an LMF, the first specified information may be sent by using an LTE positioning protocol (LPP) message. In a case that the network device is an access network device, the first specified information may be sent by using a system information broadcast, a radio resource control (RRC) message, or a medium access control (MAC) control element (CE).

It should be noted that those skilled in the art may understand that the method provided in the embodiments of the present disclosure may be performed separately, or may be performed with some methods in the embodiments of the present disclosure or some methods in the related art.

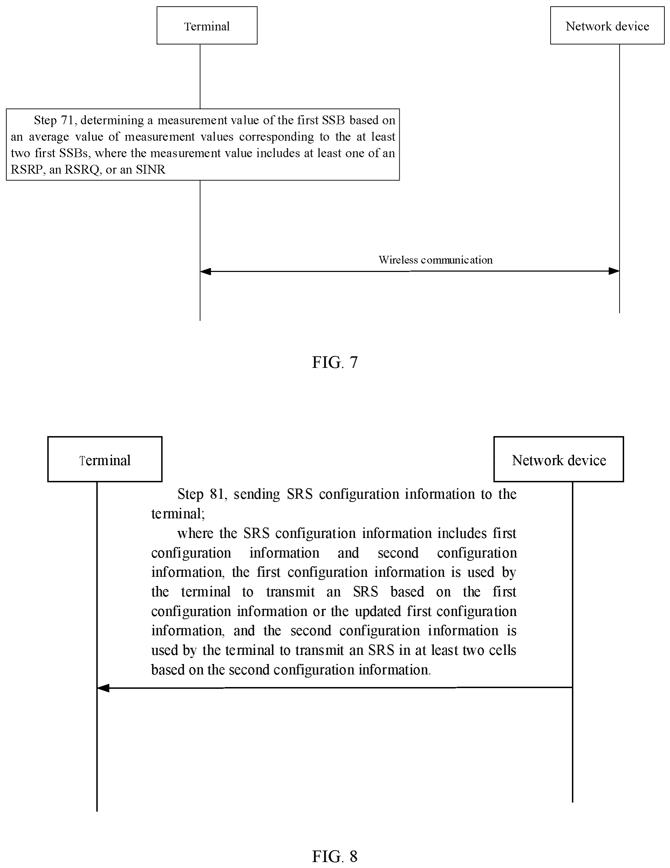

As shown in FIG. 7, according to an embodiment of the present disclosure, there is provided a method for updating SRS configuration information, and the method is performed by a terminal. There are at least two first SSBs, and the method includes the following step.

In step 71, a measurement value of the first SSB is determined based on an average value of measurement values corresponding to the at least two first SSBs.

Among them, the measurement value includes at least one of an RSRP, an RSRQ, or an SINR.

In an embodiment, the measurement value includes at least one of L1-RSRP, L1-RSRQ, L1-SINR, L3-RSRP, L3-RSRQ, or L3-SINR.

In an embodiment, a measurement value of the first SSB is determined based on an average value of measurement values corresponding to at least two first SSBs, where the measurement value includes at least one of an RSRP, an RSRQ, or an SINR. The measurement value corresponding to the first SSB is greater than a second threshold; or, the measurement value corresponding to the first SSB is greater than a measurement value corresponding to a second SSB, where the measurement value includes at least one of an RSRP, an RSRQ, or an SINR.

In an embodiment, a mapping relationship is determined based on second specified information sent by a network device or predetermined protocol information. The mapping relationship is a relationship between a TA and a measurement value corresponding to an SSB, or the mapping relationship is a relationship between a TA adjustment value and a change value of a measurement value corresponding to an SSB, where the measurement value includes at least one of an RSRP, an RSRQ, or an SINR, and the network device is an access network device or an LMF. The first configuration information in the sounding reference signal (SRS) configuration information is updated based on a first SSB, where the SRS configuration information includes the first configuration information and the second configuration information, and the terminal transmits an SRS in at least two cells based on the second configuration information. Updating the first configuration information based on the first SSB includes: updating a TA configured by the first configuration information based on the mapping relationship and the measurement value corresponding to the first SSB. There are at least two first SSBs, and the measurement value of the first SSB is determined based on an average value of the measurement values corresponding to the at least two first SSBs. In a case that the network device is an LMF, the second specified information may be sent by using an LTE positioning protocol (LPP) message. In a case that the network device is an access network device, the second specified information may be sent by using a system information broadcast, a radio resource control (RRC) message, or a medium access control (MAC) control element (CE).

It should be noted that those skilled in the art may understand that the method provided in the embodiments of the present disclosure may be performed separately, or may be performed with some methods in the embodiments of the present disclosure or some methods in the related art.

As shown in FIG. 8, according to an embodiment of the present disclosure, there is provided a method for updating SRS configuration information, where the method is performed by an access network device, and the method includes the following step.

In step 81, SRS configuration information is sent to a terminal.

Among them, the SRS configuration information includes the first configuration information and the second configuration information, where the first configuration information is used by the terminal to transmit an SRS based on the first configuration information or the updated first configuration information, and the second configuration information is used by the terminal to transmit an SRS in at least two cells based on the second configuration information.

Here, the terminal involved in the present disclosure may be, but is not limited to, a mobile phone, a wearable device, a vehicle-mounted terminal, a roadside unit (RSU), a smart home terminal, an industrial sensing device, and/or a medical device. In some embodiments, the terminal may be a Redcap terminal or a new radio (NR) terminal in a predetermined version (for example, an NR terminal in R17).

The network device involved in the present disclosure may also be an access network device or a core network device. The access network device may be a base station. The core network device may be a first network function, and the first network function may be a location management function network element. For example, the location management function network element includes a location server, and the location server may be implemented as any one of a location management function (LMF), an enhanced serving mobile location center (E-SMLC), a secure user plane location (SUPL), or a SUPL location platform (SULLP).

In an embodiment, in a scenario in which a terminal is located, the SRS configuration information is sent to a terminal, where the SRS configuration information includes the first configuration information and the second configuration information. The first configuration information is used by the terminal to transmit an SRS based on the first configuration information or the updated first configuration information, and the second configuration information is used by the terminal to transmit an SRS in at least two cells based on the second configuration information. It may be understood that the second configuration information is applicable to at least two cells, that is, the terminal transmits the SRS in at least two cells based on the same second configuration information.

In an embodiment, the terminal may move from a first cell to a second cell. The SRS configuration information is sent to the terminal, where the SRS configuration information includes the first configuration information and the second configuration information. The first configuration information is used by the terminal to transmit an SRS based on the first configuration information or the updated first configuration information, and the second configuration information is used by the terminal to transmit an SRS in at least two cells based on the second configuration information. It may be understood that, the first configuration information may be different when the terminal is located in different cells (for example, the first cell and the second cell), so that the terminal needs to update the first configuration information. That is, the terminal transmits the SRS in different cells based on different first configuration information.

In an embodiment, SRS configuration information is sent to a terminal, where the SRS configuration information includes the first configuration information and the second configuration information. The first configuration information is used by the terminal to transmit an SRS based on the first configuration information or the updated first configuration information, and the second configuration information is used by the terminal to transmit an SRS in at least two cells based on the second configuration information. For example, the first configuration information is used by the terminal to update the first configuration information in response to a change amount of a measurement value being greater than or equal to a first threshold, where the measurement value includes at least one of a reference signal receiving power (RSRP), a reference signal receiving quality (RSRQ), or a signal to interference plus noise ratio (SINR). It may be understood that a change in the measurement value may be caused due to the movement of the terminal. The first configuration information may also be different when the terminal is located at different positions in the same cell, so that the terminal needs to update the first configuration information. That is, the terminal transmits the SRS at different positions in the same cell based on different first configuration information.

In an embodiment, third specified information is sent to a terminal, where the third specified information indicates the first threshold.

For example, in a case that the network device is an LMF, the third specified information may be sent by using an LTE positioning protocol (LPP) message. In a case that the network device is an access network device, the third specified information may be sent by using a system information broadcast, a radio resource control (RRC) message, or a medium access control (MAC) control element (CE).

It should be noted that the measurement value in the present disclosure may also be a measurement value of L1 and/or L3. For example, the measurement value includes at least one of L1-RSRP, L1-RSRQ, L1-SINR, L3-RSRP, L3-RSRQ, or L3-SINR, which is not limited here. In an embodiment, the measurement value of L3 may be a measurement result of radio resource management (RRM). It should be noted that the L1-RSRP is an RSRP measured at the L1 layer, and the other is similar correspondingly.

In an embodiment, SRS configuration information is sent to a terminal, where the SRS configuration information includes the first configuration information and the second configuration information. The first configuration information is used by the terminal to transmit an SRS based on the first configuration information or the updated first configuration information, and the second configuration information is used by the terminal to transmit an SRS in at least two cells based on the second configuration information. For example, the first configuration information is used by the terminal to update the first configuration information in response to a change amount of a measurement value being greater than or equal to a first threshold, where the measurement value includes at least one of a reference signal receiving power (RSRP), a reference signal receiving quality (RSRQ), or a signal to interference plus noise ratio (SINR). A reference signal is sent to the terminal, where the reference signal is used by the terminal to determine the measurement value, and the reference signal is an SSB or a channel state information reference signal (CSI-RS). The CSI-RS may include a phase tracking reference signal and/or a tracking reference signal.

In an embodiment, SRS configuration information is sent to a terminal, where the SRS configuration information includes the first configuration information and the second configuration information. The first configuration information is used by the terminal to transmit an SRS based on the first configuration information or the updated first configuration information, and the second configuration information is used by the terminal to transmit an SRS in at least two cells based on the second configuration information. For example, the first configuration information is used by the terminal to update the first configuration information in response to a change amount of a measurement value being greater than or equal to a first threshold, where the measurement value includes at least one of a reference signal receiving power (RSRP), a reference signal receiving quality (RSRQ), or a signal to interference plus noise ratio (SINR). A reference signal is sent to the terminal, where the reference signal is used by the terminal to determine the measurement value, and the reference signal is an SSB or a channel state information reference signal (CSI-RS). The reference signal is determined as a pathloss reference signal (pathloss RS), a reference signal indicated by transmission configuration indication state (TCI state) information and/or a reference signal indicated by spatial relation information. The CSI-RS may include a phase tracking reference signal and/or a tracking reference signal. Among them, it may be determined by the terminal based on the first configuration information sent by the network device or determined when the terminal updates the first configuration information that the reference signal is determined as a pathloss reference signal (pathloss RS), a reference signal indicated by transmission configuration indication state (TCI state) information and/or a reference signal indicated by spatial relation information.

In an embodiment, SRS configuration information is sent to a terminal, where the SRS configuration information includes the first configuration information and the second configuration information. The first configuration information is used by the terminal to transmit an SRS based on the first configuration information or the updated first configuration information, and the second configuration information is used by the terminal to transmit an SRS in at least two cells based on the second configuration information. For example, the first configuration information is used by the terminal to update the first configuration information in response to the terminal performing cell reselection.

In an embodiment, SRS configuration information is sent to a terminal, where the SRS configuration information includes the first configuration information and the second configuration information. The first configuration information is used by the terminal to transmit an SRS based on the first configuration information or the updated first configuration information, and the second configuration information is used by the terminal to transmit an SRS in at least two cells based on the second configuration information. The first configuration information includes at least one of uplink beam information, timing advance (TA) information, pathloss reference signal information, or power control related parameter information.

Here, the power control related parameter information may be P0 and/or alpha.

It should be noted that the uplink beam information may be referred to as spatial relation information, an uplink transmission configuration indication (TCI) state, or a spatial transmission filter.

In an embodiment, SRS configuration information is sent to a terminal, where the SRS configuration information includes the first configuration information and the second configuration information. The first configuration information is used by the terminal to transmit an SRS based on the first configuration information or the updated first configuration information, and the second configuration information is used by the terminal to transmit an SRS in at least two cells based on the second configuration information. The second configuration information includes at least one of time domain parameter information, frequency domain parameter information, comb parameter information, or power control related parameter information.

In an embodiment, the time domain parameter information indicates at least one of the following parameters: a period, a slot shift value, a start symbol position, a number of symbols, and a number of repetitions.

In an embodiment, the frequency domain parameter information indicates at least one of the following parameters: a frequency domain position (freqDomainPosition), a frequency domain shift (freqDomainShift), or a frequency hopping (freqHopping).

In an embodiment, the comb parameter information indicates at least one of the following parameters: a comb offset (combOffset) or a cyclic shift (cyclic Shift).

In an embodiment, a first reference signal is sent to the terminal, where the first reference signal is used by the terminal to update the first configuration information based on the first reference signal. The SRS configuration information is sent to the terminal, where the SRS configuration information includes the first configuration information and the second configuration information. The first configuration information is used by the terminal to transmit an SRS based on the first configuration information or the updated first configuration information, and the second configuration information is used by the terminal to transmit an SRS in at least two cells based on the second configuration information.

In an embodiment, the first reference signal is one of the following:
a synchronization signal/PBCH block (SSB);
a channel state information reference signal (CSI-RS);
a phase tracking reference signal; or
a tracking reference signal.

It should be noted that, in the present disclosure, it is described that the first configuration information is updated by taking that the first reference signal is the first SSB as an example, however, the scenario applicable to the first SSB is also applicable to a channel state information reference signal (CSI-RS), a phase tracking reference signal or a tracking reference signal. That is, in the present disclosure, the first SSB may be replaced by a channel state information reference signal (CSI-RS), a phase tracking reference signal, or a tracking reference signal.

In an embodiment, SRS configuration information is sent to a terminal, where the SRS configuration information includes the first configuration information and the second configuration information. The first configuration information is used by the terminal to transmit an SRS based on the first configuration information or the updated first configuration information, and the second configuration information is used by the terminal to transmit an SRS in at least two cells based on the second configuration information. A first SSB is sent, where the first SSB is used by the terminal to update the first configuration information based on the first SSB.

In an embodiment, SRS configuration information is sent to a terminal, where the SRS configuration information includes the first configuration information and the second configuration information. The first configuration information is used by the terminal to transmit an SRS based on the first configuration information or the updated first configuration information, and the second configuration information is used by the terminal to transmit an SRS in at least two cells based on the second configuration information. A first SSB is sent, where the first SSB is used by the terminal to update the first configuration information based on the first SSB. A measurement value corresponding to the first SSB is greater than a second threshold, or the measurement value corresponding to the first SSB is greater than a measurement value corresponding to a second SSB, where the measurement value includes at least one of an RSRP, an RSRQ, or an SINR. For example, the measurement value includes at least one of L1-RSRP, L1-RSRQ, L1-SINR, L3-RSRP, L3-RSRQ, or L3-SINR.

For example, the measurement value corresponding to the first SSB may be a maximum measurement value among measurement values corresponding to all SSBs, but is not limited to the maximum measurement value.

In an embodiment, third specified information is sent to a terminal, where the third specified information indicates the second threshold.

For example, in a case that the network device is an LMF, the third specified information may be sent by using an LTE positioning protocol (LPP) message. In a case that the network device is an access network device, the third specified information may be sent by using a system information broadcast, a radio resource control (RRC) message, or a medium access control (MAC) control element (CE).

In an embodiment, SRS configuration information is sent to a terminal, where the SRS configuration information includes the first configuration information and the second configuration information. The first configuration information is used by the terminal to transmit an SRS based on the first configuration information or the updated first configuration information, and the second configuration information is used by the terminal to transmit an SRS in at least two cells based on the second configuration information. A first SSB is sent, where the first SSB is used by the terminal to update the first configuration information based on the first SSB. For example, the first SSB being used by the terminal to update the first configuration information based on the first SSB, includes: the first SSB being used by the terminal to update an uplink beam in the first configuration information as a beam corresponding to the first SSB. It may also be understood that the SRS is updated as being in a quasi-co location type D relationship with the first SSB.

In an embodiment, SRS configuration information is sent to a terminal, where the SRS configuration information includes the first configuration information and the second configuration information. The first configuration information is used by the terminal to transmit an SRS based on the first configuration information or the updated first configuration information, and the second configuration information is used by the terminal to transmit an SRS in at least two cells based on the second configuration information. A first SSB is sent, where the first SSB is used by the terminal to update the first configuration information based on the first SSB. For example, the first SSB being used by the terminal to update the first configuration information based on the first SSB, includes: the first SSB being used by the terminal to update a pathloss reference signal in the first configuration information as the first SSB.

In an embodiment, SRS configuration information is sent to a terminal, where the SRS configuration information includes the first configuration information and the second configuration information. The first configuration information is used by the terminal to transmit an SRS based on the first configuration information or the updated first configuration information, and the second configuration information is used by the terminal to transmit an SRS in at least two cells based on the second configuration information. A first SSB is sent, where the first SSB is used by the terminal to update the first configuration information based on the first SSB. For example, the first SSB being used by the terminal to update the first configuration information based on the first SSB, includes: the first SSB being used by the terminal to update a pathloss reference signal in the first configuration information as at least two first SSBs. The at least two first SSBs are used by the terminal to determine a pathloss based on an average value of measurement values corresponding to the at least two first SSBs.

In an embodiment, a first SSB is sent to the terminal, where the first SSB is used by the terminal to update the first configuration information based on the first SSB. There are at least two first SSBs, and the at least two first SSBs are used by the terminal to determine a pathloss based on an average value of measurement values corresponding to the at least two first SSBs. The SRS configuration information is sent to the terminal, where the SRS configuration information includes the first configuration information and the second configuration information. The first configuration information is used by the terminal to transmit an SRS based on the first configuration information or the updated first configuration information, and the second configuration information is used by the terminal to transmit an SRS in at least two cells based on the second configuration information.

In an embodiment, the first indication information is sent to the terminal, where the first specified information is used to indicate the number of the first reference signals.

For example, in a case that the network device is an LMF, the first specified information may be sent by using an LTE positioning protocol (LPP) message. In a case that the network device is an access network device, the first specified information may be sent by using a system information broadcast, a radio resource control (RRC) message, or a medium access control (MAC) control element (CE).

In an embodiment, the first SSB is sent to the terminal, where the first SSB is used by the terminal to update the first configuration information based on the first SSB. There are at least two first SSBs, and the at least two first SSBs are used by the terminal to determine a pathloss based on an average value of measurement values corresponding to at least two first SSBs. The measurement value includes at least one of an RSRP, an RSRQ, or an SINR. For example, the measurement value includes at least one of L1-RSRP, L1-RSRQ, L1-SINR, L3-RSRP, L3-RSRQ, or L3-SINR. The SRS configuration information is sent to the terminal, where the SRS configuration information includes the first configuration information and the second configuration information, the first configuration information is used by the terminal to transmit an SRS based on the first configuration information or the updated first configuration information, and the second configuration information is used by the terminal to transmit an SRS in at least two cells based on the second configuration information.

It should be noted that, when there is a plurality of first SSBs, it is not needed to determine a pathloss reference signal (pathloss RS), because it is actually to determine a measurement value corresponding to the pathloss RS when the pathloss RS is determined, and in this case, the pathloss may be directly determined based on the average measurement value of the plurality of SSBs. It should be noted that the plurality of SSBs (for example, the plurality of first SSBs) may refer to that the measurement value of each SSB in the plurality of SSBs is higher than a threshold, or the plurality of SSBs are the N SSBs (the top N SSBs in an arrange according to a descending order) with the strongest measurement quality (which may be a measurement value based on a beam) in all SSBs, where the measurement value includes at least one of an RSRP, an RSRQ, or an SINR. For example, the measurement value includes at least one of L1-RSRP, L1-RSRQ, L1-SINR, L3-RSRP, L3-RSRQ, or L3-SINR.

In an embodiment, SRS configuration information is sent to a terminal, where the SRS configuration information includes the first configuration information and the second configuration information, the first configuration information is used by the terminal to transmit an SRS based on the first configuration information or the updated first configuration information, and the second configuration information is used by the terminal to transmit an SRS in at least two cells based on the second configuration information. A first SSB is sent, where the first SSB is used by the terminal to update the first configuration information based on the first SSB. For example, the first SSB being used by the terminal to update the first configuration information based on the first SSB, includes: the first SSB being used by the terminal to update a TA in the first configuration information based on a mapping relationship and a measurement value corresponding to the first SSB, where the mapping relationship is a relationship between a TA and a measurement value corresponding to an SSB, or the mapping relationship is a relationship between a TA adjustment value and a change value of a measurement value corresponding to an SSB. The measurement value includes at least one of an RSRP, an RSRQ, or an SINR. For example, the measurement value includes at least one of L1-RSRP, L1-RSRQ, L1-SINR, L3-RSRP, L3-RSRQ, or L3-SINR.

For example, if the change of the measurement value is X dB, the change of the TA is Y us. Based on this change rule, the mapping relationship between the measurement value and the TA may be determined. After the current measurement value is obtained, the TA corresponding to the measurement value may be determined based on the measurement value and the mapping relationship. It may be understood that, when the measurement value increases, the TA decreases; and, when the measurement value decreases, the TA increases.

In an embodiment, the second specified information is sent to the terminal, where the second specified information is used to indicate the mapping relationship.

For example, in a case that the network device is an LMF, the second specified information may be sent by using an LTE positioning protocol (LPP) message. In a case that the network device is an access network device, the second specified information may be sent by using a system information broadcast, a radio resource control (RRC) message, or a medium access control (MAC) control element (CE).

In an embodiment, SRS configuration information is sent to a terminal, where the SRS configuration information includes the first configuration information and the second configuration information, the first configuration information is used by the terminal to transmit an SRS based on the first configuration information or the updated first configuration information, and the second configuration information is used by the terminal to transmit an SRS in at least two cells based on the second configuration information. A first SSB is sent, where the first SSB is used by the terminal to update the first configuration information based on the first SSB. The first SSB is sent to the terminal, where the first SSB is used by the terminal to update the first configuration information based on the first SSB. There are at least two first SSBs, and the at least two first SSBs are used by the terminal to determine a measurement value of the first SSB based on an average value of measurement values corresponding to the at least two first SSBs. The measurement value includes at least one of an RSRP, an RSRQ, or an SINR. For example, the measurement value includes at least one of L1-RSRP, L1-RSRQ, L1-SINR, L3-RSRP, L3-RSRQ, or L3-SINR.

It should be noted that the plurality of SSBs (for example, the plurality of first SSBs) may refer to that the measurement value of each SSB in the plurality of SSBs is higher than a threshold, or the plurality of SSBs are the N SSBs (the top N SSBs in an arrange according to a descending order) with the strongest measurement quality (which may be a measurement value based on a beam) in all SSBs, where the measurement value includes at least one of an RSRP, an RSRQ, or an SINR.

It should be noted that those skilled in the art may understand that the method provided in the embodiments of the present disclosure may be performed separately, or may be performed with some methods in the embodiments of the present disclosure or some methods in the related art.

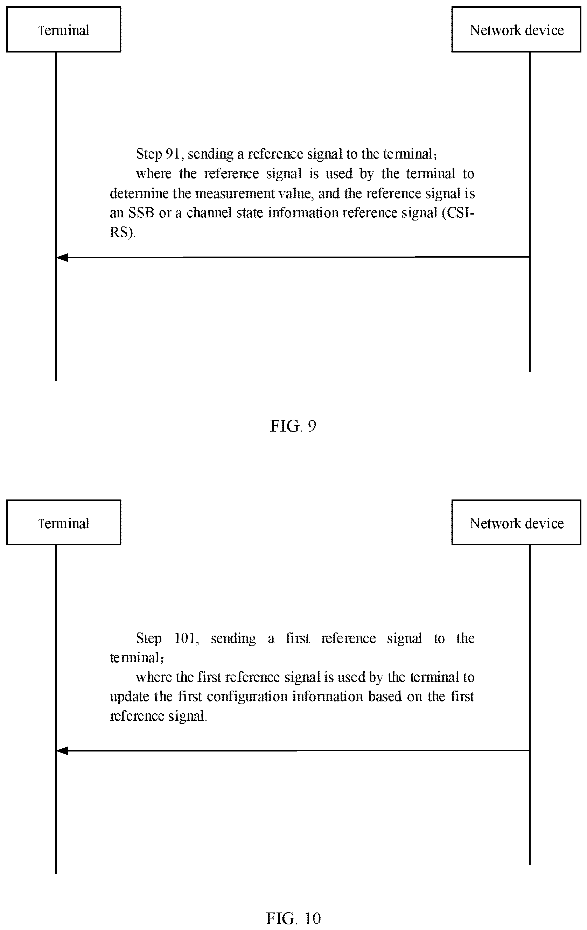

As shown in FIG. 9, according to an embodiment of the present disclosure, there is provided a method for updating SRS configuration information, where the method is performed by an access network device, and the method includes the following step.

In step 91, a reference signal is sent to a terminal.

Among them, the reference signal is used by the terminal to determine the measurement value, and the reference signal is an SSB or a channel state information reference signal (CSI-RS).

In an embodiment, SRS configuration information is sent to a terminal, where the SRS configuration information includes the first configuration information and the second configuration information, the first configuration information is used by the terminal to transmit an SRS based on the first configuration information or the updated first configuration information, and the second configuration information is used by the terminal to transmit an SRS in at least two cells based on the second configuration information. For example, the first configuration information is used by the terminal to update the first configuration information in response to a change amount of a measurement value being greater than or equal to a first threshold, where the measurement value includes at least on a reference signal receiving power (RSRP), a reference signal receiving quality (RSRQ), or a signal to interference plus noise ratio (SINR). A reference signal is sent to the terminal, where the reference signal is used by the terminal to determine the measurement value, and the reference signal is an SSB or a channel state information reference signal (CSI-RS). The CSI-RS may include a phase tracking reference signal and/or a tracking reference signal.

In an embodiment, SRS configuration information is sent to a terminal, where the SRS configuration information includes the first configuration information and the second configuration information, the first configuration information is used by the terminal to transmit an SRS based on the first configuration information or the updated first configuration information, and the second configuration information is used by the terminal to transmit an SRS in at least two cells based on the second configuration information. For example, the first configuration information is used by the terminal to update the first configuration information in response to a change amount of a measurement value being greater than or equal to a first threshold, where the measurement value includes at least one of a reference signal receiving power (RSRP), a reference signal receiving quality (RSRQ), or a signal to interference plus noise ratio (SINR). A reference signal is sent to the terminal, where the reference signal is used by the terminal to determine the measurement value, and the reference signal is an SSB or a channel state information reference signal (CSI-RS). The reference signal is determined as a pathloss reference signal (pathloss RS), a reference signal indicated by transmission configuration indication state (TCI state) information and/or a reference signal indicated by spatial relation information. The CSI-RS may include a phase tracking reference signal and/or a tracking reference signal. Among them, it may be determined by the terminal based on the first configuration information sent by the network device or determined when the terminal updates the first configuration information that the reference signal is determined as a pathloss reference signal (pathloss RS), a reference signal indicated by transmission configuration indication state (TCI state) information and/or a reference signal indicated by spatial relation information.

It should be noted that those skilled in the art may understand that the method provided in the embodiments of the present disclosure may be performed separately, or may be performed with some methods in the embodiments of the present disclosure or some methods in the related art.

As shown in FIG. 10, according to an embodiment of the present disclosure, there is provided a method for updating SRS configuration information, where the method is performed by an access network device, and the method includes the following step.

In step 101, a first reference signal is sent to the terminal.

Among them, the first reference signal is used by the terminal to update the first configuration information based on the first reference signal.

In an embodiment, a first reference signal is sent to the terminal, where the first reference signal is used by the terminal to update the first configuration information based on the first reference signal. The SRS configuration information is sent to the terminal, where the SRS configuration information includes the first configuration information and the second configuration information, the first configuration information is used by the terminal to transmit an SRS based on the first configuration information or the updated first configuration information, and the second configuration information is used by the terminal to transmit an SRS in at least two cells based on the second configuration information.

In an embodiment, the first reference signal is one of the following:
a synchronization signal/PBCH block (SSB);
a channel state information reference signal (CSI-RS);
a phase tracking reference signal; or
a tracking reference signal.

It should be noted that, in the present disclosure, it is described that the first configuration information is updated by taking that the first reference signal is the first SSB as an example, however, the scenario applicable to the first SSB is also applicable to a channel state information reference signal (CSI-RS), a phase tracking reference signal or a tracking reference signal. That is, in the present disclosure, the first SSB may be replaced by a channel state information reference signal (CSI-RS), a phase tracking reference signal, or a tracking reference signal.

In an embodiment, SRS configuration information is sent to a terminal, where the SRS configuration information includes the first configuration information and the second configuration information. The first configuration information is used by the terminal to transmit an SRS based on the first configuration information or the updated first configuration information, and the second configuration information is used by the terminal to transmit an SRS in at least two cells based on the second configuration information. A first SSB is sent, where the first SSB is used by the terminal to update the first configuration information based on the first SSB.

In an embodiment, SRS configuration information is sent to a terminal, where the SRS configuration information includes the first configuration information and the second configuration information. The first configuration information is used by the terminal to transmit an SRS based on the first configuration information or the updated first configuration information, and the second configuration information is used by the terminal to transmit an SRS in at least two cells based on the second configuration information. A first SSB is sent, where the first SSB is used by the terminal to update the first configuration information based on the first SSB. A measurement value corresponding to the first SSB is greater than a second threshold, or the measurement value corresponding to the first SSB is greater than a measurement value corresponding to a second SSB, where the measurement value includes at least one of an RSRP, an RSRQ, or an SINR. For example, the measurement value includes at least one of L1-RSRP, L1-RSRQ, L1-SINR, L3-RSRP, L3-RSRQ, or L3-SINR.

For example, the measurement value corresponding to the first SSB may be a maximum measurement value among measurement values corresponding to all SSBs, but is not limited to the maximum measurement value.

In an embodiment, third specified information is sent to a terminal, where the third specified information indicates the second threshold.

For example, in a case that the network device is an LMF, the third specified information may be sent by using an LTE positioning protocol (LPP) message. In a case that the network device is an access network device, the third specified information may be sent by using a system information broadcast, a radio resource control (RRC) message, or a medium access control (MAC) control element (CE).

It should be noted that those skilled in the art may understand that the method provided in the embodiments of the present disclosure may be performed separately, or may be performed with some methods in the embodiments of the present disclosure or some methods in the related art.

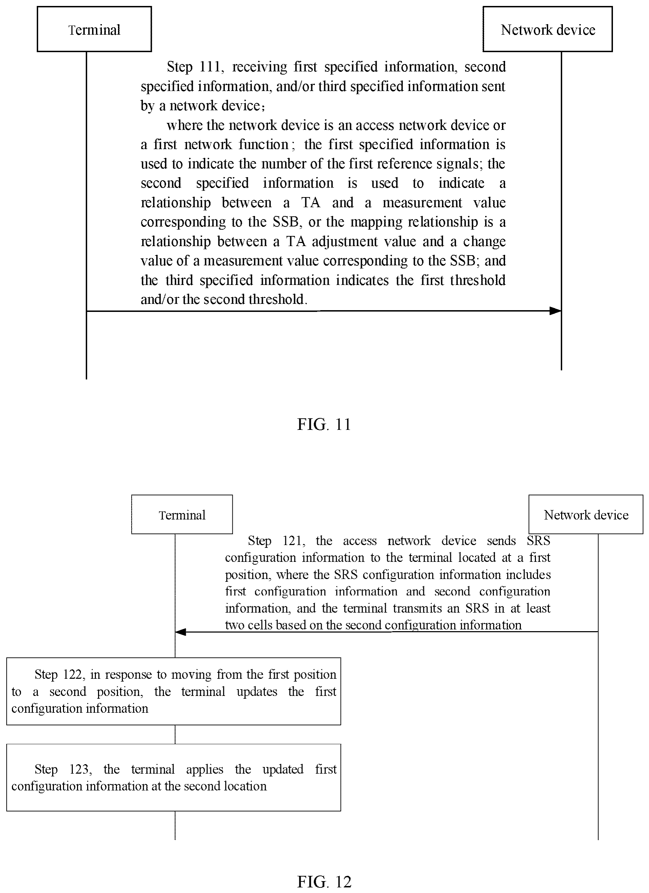

As shown in FIG. 11, according to an embodiment of the present disclosure, there is provided a method for updating SRS configuration information, where the method is performed by an access network device, and the method includes the following step.

Step 111, first specified information, second specified information, and/or third specified information sent by a network device are received.

Among them, the network device is an access network device or a first network function. The first specified information is used to indicate the number of the first reference signals. The second specified information is used to indicate a relationship between a TA and a measurement value corresponding to the SSB, or the mapping relationship is a relationship between a TA adjustment value and a change value of a measurement value corresponding to the SSB. The third specified information indicates the first threshold and/or the second threshold.

In an embodiment, the first reference signal is one of the following:
a synchronization signal/PBCH block (SSB);
a channel state information reference signal (CSI-RS);
a phase tracking reference signal; or
a tracking reference signal.

In an embodiment, the first indication information is sent to the terminal, where the first specified information is used to indicate the number of the first reference signals. For example, in a case that the network device is an LMF, the first specified information may be sent by using an LTE positioning protocol (LPP) message. In a case that the network device is an access network device, the first specified information may be sent by using a system information broadcast, a radio resource control (RRC) message, or a medium access control (MAC) control element (CE).

In an embodiment, the second specified information is sent to the terminal, where the second specified information is used to indicate the mapping relationship. For example, in a case that the network device is an LMF, the second specified information may be sent by using an LTE positioning protocol (LPP) message. In a case that the network device is an access network device, the second specified information may be sent by using a system information broadcast, a radio resource control (RRC) message, or a medium access control (MAC) control element (CE).

In an embodiment, the third specified information is sent to the terminal, where the third specified information indicates the second threshold. For example, in a case that the network device is an LMF, the third specified information may be sent by using an LTE positioning protocol (LPP) message. In a case that the network device is an access network device, the third specified information may be sent by using a system information broadcast, a radio resource control (RRC) message, or a medium access control (MAC) control element (CE).

It should be noted that those skilled in the art may understand that the method provided in the embodiments of the present disclosure may be performed separately, or may be performed with some methods in the embodiments of the present disclosure or some methods in the related art.

In order to better understand the embodiments of the present disclosure, the present disclosure is further described below by using an example embodiment.

As shown in FIG. 12, according to an embodiment of the present disclosure, there is provided a method for updating SRS configuration information, including following steps.

In step 121, an access network device sends SRS configuration information to a terminal located at a first position, where the SRS configuration information includes first configuration information and second configuration information, and the terminal transmits an SRS in at least two cells based on the second configuration information.

Here, the access network device may obtain the SRS configuration information based on a request from the terminal.

In step 122, in response to moving from the first position to a second position, the terminal updates the first configuration information.

Here, it may be determined that the terminal moves from the first position to the second position in response to a predetermined condition being satisfied.

It may be understood that the predetermined condition is a condition associated with the movement of the terminal, for example, the terminal moving from a first cell to a second cell. In an embodiment, the predetermined condition being satisfied, includes: a change amount of a measurement value being greater than or equal to a first threshold, and/or cell reselection being performed. The measurement value includes at least one of an RSRP, an RSRQ, or an SINR. For example, the measurement value includes at least one of L1-RSRP, L1-RSRQ, L1-SINR, L3-RSRP, L3-RSRQ, or L3-SINR.

In step 123, the terminal applies the updated first configuration information at the second location.

In this way, when the terminal moves from the first position to the second position, the terminal does not need to request, at the second position, the access network device to obtain the SRS configuration information again, and may directly apply the autonomously updated first configuration information at the second position.

It should be noted that those skilled in the art may understand that the method provided in the embodiments of the present disclosure may be performed separately, or may be performed with some methods in the embodiments of the present disclosure or some methods in the related art.

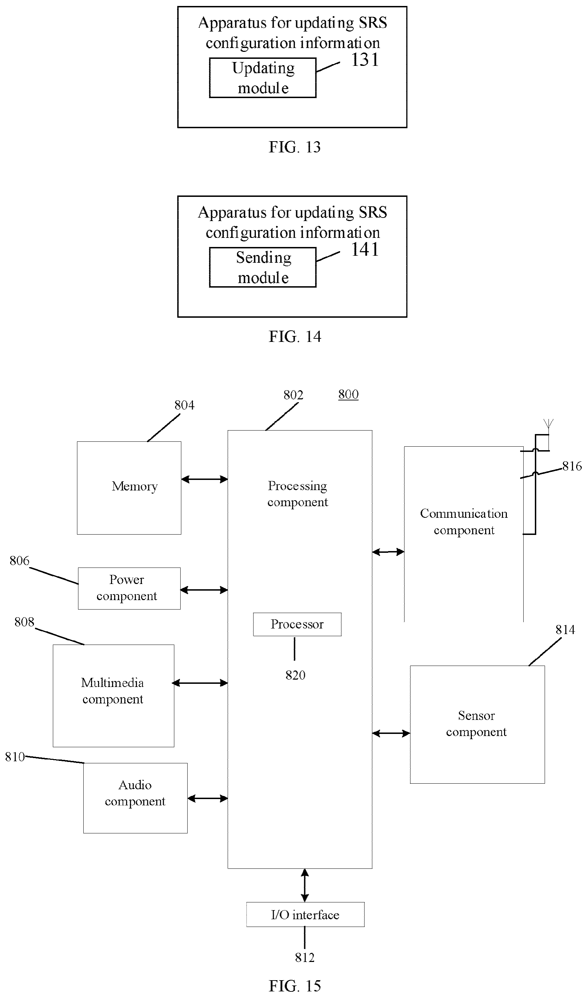

As shown in FIG. 13, according to an embodiment of the present disclosure, there is provided an apparatus for updating SRS configuration information, where the apparatus includes an updating module 131.

The updating module 131 is configured to update first configuration information in sounding reference signal (SRS) configuration information.

Where, the SRS configuration information includes first configuration information and second configuration information, and the terminal transmits an SRS in at least two cells based on the second configuration information.

It should be noted that those skilled in the art may understand that the method provided in the embodiments of the present disclosure may be performed separately, or may be performed with some methods in the embodiments of the present disclosure or some methods in the related art.

As shown in FIG. 14, according to an embodiment of the present disclosure, there is provided an apparatus for updating SRS configuration information, where the apparatus includes a sending module 141.

The sending module 141 is configured to send SRS configuration information to a terminal.

Among them, the SRS configuration information includes first configuration information and second configuration information, where the first configuration information is used by the terminal to transmit an SRS based on the first configuration information or the updated first configuration information, and the second configuration information is used by the terminal to transmit an SRS in at least two cells based on the second configuration information.

It should be noted that those skilled in the art may understand that the method provided in the embodiments of the present disclosure may be performed separately, or may be performed with some methods in the embodiments of the present disclosure or some methods in the related art.

According to an embodiment of the present disclosure, there is provided a communication device, including:
a processor; and
a memory, configured to store an executable instruction by the processor;
where the processor is configured to, when running the executable instruction, implement the method applied to any embodiment of the present disclosure.

Among them, the processor may include various types of storage media. The storage medium is a non-transitory computer storage medium. After the communication device is powered down, the information stored on the communication device can continue to be memorized.

The processor may be connected to the memory by using a bus or the like, and is configured to read an executable program stored in the memory.

According to an embodiment of the present disclosure, there is further provided a computer storage medium, where the computer storage medium stores a computer-executable program. When the executable program is executed by a processor, the method according to any embodiment of the present disclosure is implemented.

With regard to the apparatus in the above embodiments, the specific manner in which the modules perform operations has been described in detail in the embodiments related to the method, which will not be elaborated here.

As shown in FIG. 15, according to an embodiment of the present disclosure, there is provided a structure of a terminal.

With reference to the terminal 800 shown in FIG. 15, the embodiment provides a terminal 800, which may specifically be a mobile phone, a computer, a digital broadcast terminal, a message transceiving device, a game console, a tablet device, a medical device, a fitness device, a personal digital assistant, or the like.

Referring to FIG. 15, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as operations associated with display, telephone calls, data communications, camera operations, and recording operations. The processing component 802 may include one or more processors 820 to execute instructions to perform all or part of the steps in the foregoing methods. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operations of the device 800. Examples of such data include instructions for any application or method operating on the terminal 800, contact data, phonebook data, messages, pictures, videos, etc. The memory 804 may be implemented by any type of volatile or non-volatile storage device or a combination of them, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 806 provides power to various components of the terminal 800. The power component 806 may include a power management system, one or more power supplies, and other components associated with generating, managing, and distributing power for the terminal 800.

The multimedia component 808 includes a screen providing an output interface between the terminal 800 and a user. In some embodiments, the screen may include a liquid crystal display (LCD) or a touch panel (TP). If the screen includes a touch panel, the screen may be implemented as a touch screen to receive input signals from the user. The touch panel includes one or more touch sensors to sense touching, sliding, and gestures on the touch panel. The touch sensor may not only sense a boundary of a touching or sliding action, but also sense a duration and pressure associated with a touching or sliding action. In some embodiments, the multimedia component 808 includes a front camera and/or a rear camera. The front camera and/or the rear camera may receive external multimedia data when the device 800 is in an operation mode, such as a photographing mode or a video mode. Each of the front camera and the rear camera may be a fixed optical lens system or have focal length and optical zoom capability.

The audio component 810 is configured to output and/or input audio signals. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and a peripheral interface module, which may be a keyboard, a click wheel, a button, or the like. The button may include, but is not limited to, a home button, a volume button, a starting button, and a locking button.

The sensor component 814 includes one or more sensors to provide status assessments of various aspects of the terminal 800. For example, the sensor component 814 may detect an on/off state of the device 800, relative positioning of the components, such as a display and a keypad of the terminal 800. The sensor component 814 may further detect a position change of the terminal 800 or of one component of the terminal 800, presence or absence of contact between the user and the terminal 800, an orientation or acceleration/deceleration of the terminal 800, and a temperature change of the terminal 800. The sensor component 814 may include a proximity sensor configured to detect the presence of nearby objects without any physical contact. The sensor component 814 may also include an optical sensor, such as a CMOS or CCD image sensor, for use in imaging applications. In some embodiments, the sensor component 814 may further include an acceleration sensor, a gyroscope sensor, a magnetic sensor, a pressure sensor, or a temperature sensor.

The communication component 816 is configured to facilitate wired or wireless communication between the terminal 800 and other devices. The terminal 800 may access a wireless network based on a communication standard, such as Wi-Fi, 2G, or 3G, or a combination of them. In an example embodiment, the communication component 816 receives a broadcast signal or broadcast related information from an external broadcast management system via a broadcast channel. In an example embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, or other technologies.

In an example embodiment, the terminal 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing the methods described above.

In an example embodiment, there is further provided a non-transitory computer-readable storage medium including an instruction, for example, a memory 804 including an instruction, and the instructions may be executed by the processor 820 of the terminal 800 to complete the above method. For example, the non-transitory computer-readable storage medium may be a ROM, a random access memory (RAM), a CD-ROM, a magnetic tape, a floppy disk, an optical data storage device, or the like.

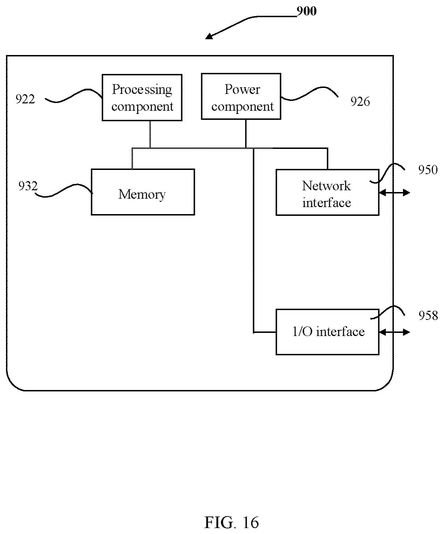

As shown in FIG. 16, an embodiment of the present disclosure shows a structure of a base station. For example, the base station 900 may be provided as a network side device. Referring to FIG. 16, the base station 900 includes a processing component 922 that further includes one or more processors, and memory resources represented by the memory 932 for storing instructions, such as applications, that may be executed by the processing component 922. The application stored in the memory 932 may include one or more modules each corresponding to a set of instructions. In addition, the processing component 922 is configured to execute instructions to perform any method applied to a base station in the foregoing methods.

The base station 900 may also include a power supply component 926 configured to perform power management of the base station 900, a wired or wireless network interface 950 configured to connect the base station 900 to a network, and an input/output (I/O) interface 958. The base station 900 may be operable based on an operating system stored in the memory 932, such as Windows Server ^{™}, MAC OS X ^{™}, Unix ^{™}, Linux ^{™}, FreeBSD ^{™}, or the like.

Other embodiments of the present invention will be apparent to those skilled in the art from consideration of the specification and practice of the invention disclosed here. The present disclosure is intended to cover any variations, uses, or adaptations of the invention following the general principles of the present disclosure and including common general knowledge and conventional technical means in the art not disclosed in the present disclosure. It is intended that the specification and examples should be considered as examples only, with a true scope and spirit of the present invention being indicated by the following claims.

It will be appreciated that the present invention is not limited to the precise structure that has been described above and illustrated in the accompanying drawings, and that various modifications and changes may be made without departing from the scope of the present invention. It is intended that the scope of the invention should be limited only by the appended claims.

## Claims

1. A method for updating SRS configuration information, performed by a terminal, and comprising:
updating first configuration information in sounding reference signal, SRS, configuration information;
wherein the SRS configuration information comprises the first configuration information and second configuration information, and the terminal transmits an SRS in at least two cells based on the second configuration information.

2. The method according to claim 1, wherein updating the first configuration information in the sounding reference signal, SRS, configuration information comprises:
updating the first configuration information in response to a change amount of a measurement value being greater than or equal to a first threshold, wherein the measurement value comprises at least one of a reference signal receiving power (RSRP), a reference signal receiving quality (RSRQ), or a signal to interference plus noise ratio (SINR);
or,
updating the first configuration information in response to the terminal performing cell reselection.

3. The method according to claim 2, wherein the measurement value is a measurement value determined based on a reference signal, and the reference signal is a synchronization signal/PBCH block (SSB) or a channel state information reference signal (CSI-RS).

4. The method according to claim 3, wherein the reference signal is determined as a pathloss reference signal, a reference signal indicated by transmission configuration indication state information and/or a reference signal indicated by spatial relation information.

5. The method according to claim 1, wherein the first configuration information comprises at least one of:
uplink beam information;
timing advance (TA) information;
pathloss reference signal information; or
power control related parameter information.

6. The method according to claim 1, wherein the second configuration information comprises at least one of:
time domain parameter information;
frequency domain parameter information;
comb parameter information; or
power control related parameter information.

7. The method according to claim 1, wherein updating the first configuration information in the sounding reference signal, SRS, configuration information comprises:
updating the first configuration information based on a first reference signal.

8. The method according to claim 7, wherein the first reference signal is one of:
a synchronization signal/PBCH block (SSB);
a channel state information reference signal (CSI-RS); a phase tracking reference signal; or
a tracking reference signal.

9. The method according to claim 7, wherein a measurement value corresponding to the first reference signal is greater than a second threshold, or the measurement value corresponding to the first reference signal is greater than a measurement value corresponding to a second reference signal, wherein the measurement value comprises at least one of an RSRP, an RSRQ, or an SINR.

10. The method according to claim 7, wherein updating the first configuration information based on the first reference signal comprises:
updating an uplink beam of the SRS as a beam corresponding to the first reference signal.

11. The method according to claim 7, wherein updating the first configuration information based on the first reference signal comprises:
updating a pathloss reference signal of the SRS as the first reference signal.

12. The method according to claim 11, wherein there are at least two first reference signals, and the method further comprises:
receiving first specified information sent by a network device; and
determining a number of the first reference signals based on the first specified information or predetermined protocol information;
wherein the network device is an access network device or a first network function.

13. The method according to claim 12, further comprising:
determining a pathloss based on an average value of measurement values corresponding to the at least two first reference signals;
wherein the measurement values comprise at least one of an RSRP, an RSRQ, or an SINR.

14. The method according to claim 7, wherein updating the first configuration information based on the first reference signal comprises:
updating a TA configured by the first configuration information based on a mapping relationship and a measurement value corresponding to the first reference signal;
wherein the mapping relationship is a relationship between a TA and a measurement value corresponding to a reference signal, or the mapping relationship is a relationship between a TA adjustment value and a change value of a measurement value corresponding to an SSB, wherein the measurement value comprises at least one of an RSRP, an RSRQ, or an SINR.

15. The method according to claim 14, further comprising:
receiving second specified information sent by a network device; and
determining the mapping relationship based on the second specified information or predetermined protocol information, wherein the network device is an access network device or a first network function.

16. The method according to claim 14, wherein there are at least two first reference signals, and the method further comprises:
determining a measurement value of the first reference signal based on an average value of measurement values corresponding to the at least two first reference signals.

17. The method according to claim 2 or 9, further comprising:
receiving third specified information sent by a network device, and determining the first threshold and/or a second threshold based on the third specified information;
and/or,
determining the first threshold and/or the second threshold based on predetermined protocol information, wherein the network device is an access network device or a first network function.

18. A method for updating SRS configuration information, performed by an access network device, and comprising:
sending SRS configuration information to a terminal;
wherein the SRS configuration information comprises first configuration information and second configuration information, the first configuration information is used by the terminal to transmit an SRS based on the first configuration information or updated first configuration information, and the second configuration information is used by the terminal to transmit an SRS in at least two cells based on the second configuration information.

19. The method according to claim 18, wherein the first configuration information being used by the terminal to transmit the SRS based on the first configuration information or the updated first configuration information, comprises:
the first configuration information being used by the terminal to update the first configuration information in response to a change amount of a measurement value being greater than or equal to a first threshold, wherein the measurement value comprises at least one of a reference signal receiving power (RSRP), a reference signal receiving quality (RSRQ), or a signal to interference plus noise ratio (SINR);
or,
the first configuration information being used by the terminal to update the first configuration information in response to the terminal performing cell reselection.

20. The method according to claim 19, further comprising:
sending a reference signal to the terminal;
wherein the reference signal is used by the terminal to determine the measurement value, and the reference signal is a synchronization signal/PBCH block (SSB) or a channel state information reference signal (CSI-RS).

21. The method according to claim 20, wherein the reference signal is used to be configured by the terminal as a pathloss reference signal, a reference signal indicated by transmission configuration indication state information and/or a reference signal indicated by spatial relation information.

22. The method according to claim 18, wherein the first configuration information comprises at least one of:
uplink beam information;
timing advance (TA) information;
pathloss reference signal information; or
power control related parameter information.

23. The method according to claim 18, wherein the second configuration information comprises at least one of:
time domain parameter information;
frequency domain parameter information;
comb parameter information; or
power control related parameter information.

24. The method according to claim 19, further comprising:
sending a first reference signal to the terminal;
wherein the first reference signal is used by the terminal to update the first configuration information based on the first reference signal.

25. The method according to claim 24, wherein the first reference signal is one of:
a synchronization signal/PBCH block (SSB);
a channel state information reference signal (CSI-RS);
a phase tracking reference signal; or
a tracking reference signal.

26. The method according to claim 24, wherein a measurement value corresponding to the first reference signal is greater than a second threshold, or the measurement value corresponding to the first signal is greater than a measurement value corresponding to a second reference signal, wherein the measurement value comprises at least one of an RSRP, an RSRQ, or an SINR.

27. The method according to claim 19 or claim 26, further comprising:
sending third specified information to the terminal;
wherein the third specified information indicates the first threshold and/or the second threshold.

28. The method according to claim 24, wherein the first reference signal being used by the terminal to update the first configuration information based on the first reference signal comprises:
the first reference signal being used by the terminal to update an uplink beam in the first configuration information as a beam corresponding to the first reference signal.

29. The method according to claim 24, wherein the first reference signal being used by the terminal to update the first configuration information based on the first reference signal comprises:
the first reference signal being used by the terminal to update a pathloss reference signal in the first configuration information as the first reference signal.

30. The method according to claim 29, wherein there are at least two first reference signals, and the at least two first reference signals are used by the terminal to determine a pathloss based on an average value of measurement values corresponding to the at least two first reference signals.

31. The method according to claim 24, wherein the first reference signal being used by the terminal to update the first configuration information based on the first reference signal comprises:
the first reference signal being used by the terminal to update a TA in the first configuration information based on a mapping relationship and a measurement value corresponding to the first reference signal;
wherein the mapping relationship is a relationship between a TA and a measurement value corresponding to a reference signal, or the mapping relationship is a relationship between a TA adjustment value and a change value of a measurement value corresponding to the first reference signal, wherein the measurement value comprises at least one of an RSRP, an RSRQ, or an SINR.

32. The method according to claim 31, wherein there are at least two first reference signals, and the at least two first reference signals are used by the terminal to determine a measurement value of the first reference signal based on an average value of measurement values corresponding to the at least two first reference signals.

33. The method according to claim 31, further comprising:
sending second specified information to the terminal;
wherein the second specified information is used to indicate the mapping relationship.

34. The method according to claim 30 or claim 32, further comprising:
sending first indication information to the terminal;
wherein the first specified information is used to indicate a number of the first reference signals.

35. An apparatus for updating SRS configuration information, comprising:
an updating module, configured to update first configuration information in sounding reference signal, SRS, configuration information;
wherein the SRS configuration information comprises the first configuration information and second configuration information, and a terminal transmits an SRS in at least two cells based on the second configuration information.

36. An apparatus for updating SRS configuration information, comprising:
a sending module, configured to send SRS configuration information to a terminal;
wherein the SRS configuration information comprises first configuration information and second configuration information, the first configuration information is used by the terminal to transmit an SRS based on the first configuration information or updated first configuration information, and the second configuration information is used by the terminal to transmit an SRS in at least two cells based on the second configuration information.

37. A communication device, comprising:
an antenna;
a memory; and
a processor, connected to the antenna and the memory, respectively, wherein the processor is configured to control transceiving of the antenna by executing a computer-executable instruction stored on the memory, and cause the method provided according to any one of claims 1 to 17 or 18 to 34 to be implemented.

38. A computer storage medium, wherein the computer storage medium stores a computer-executable instruction, and the computer-executable instruction, after being executed by a processor, causes the method provided according to any one of claims 1 to 17 or 18 to 34 to be implemented.
